# EUROPEAN PATENT SPECIFICATION

(11) **EP 3 771 955 B1**
(45) Date of publication and mention of the grant of the patent: **04.05.2022**
(21) Application number: 20188476.4
(22) Date of filing: 29.07.2020
(51) Int. Cl.: G05D 1/00, G05D 1/08, B62D 15/02, G05D 1/02

(54) **METHOD AND SYSTEM FOR OPERATING AN AUTONOMOUS MOBILE ROBOT BASED ON PAYLOAD SENSING**
SYSTEM UND VERFAHREN ZUM BETREIBEN EINES AUTONOMEN MOBILEN ROBOTERS BASIEREND AUF NUTZLASTERFASSUNG
PROCÉDÉ ET SYSTÈME DE COMMANDE D'UN ROBOT MOBILE AUTONOME UTILISANT UNE MESURE DE LA CHARGE UTILE

(30) Priority: 01.08.2019 GB 201911019
(43) Date of publication of application: 03.02.2021
(73) Proprietor: Arrival Limited, London W14 8TS (GB)
(72) Inventor: FAIRCLOUGH, Jamie, London W14 8TS (GB)
(74) Representative: Korenberg, Alexander Tal

(56) References cited:
- JP-A- 2011 175 369
- KR-A- 20180 042 975
- US-A1- 2017 291 315

## Description

### Field of the Disclosure

This disclosure relates to autonomous mobile robots (AMRs) with or without lifting mechanisms. AMRs are bespoke machines that can move autonomously in industrial environments, such as a warehouse or factory.

### Background to the Disclosure

AMRs with lift systems have the ability to autonomously position under and lift payloads, move them to a target destination and place them down again. AMRs without lift systems can be loaded by other means such as automated robotic loading system or human operator.

An integrated load sensing system ensures an AMR only operates with a payload that falls within its operating limit (e.g. 2000kg max) and will not attempt to operate outside if this.

While operating in an automated environment it is very important to place a given payload onto an AMR correctly. This is important because:
(i) the position of the payload directly impacts how the AMR will operate and manoeuver within its environment,
(ii) an improperly positioned payload could fall off an AMR when manoeuvring,
(iii) an improperly positioned payload could damage other objects in an operating environment when manoeuvring, and
(iv) an improperly positioned payload can promote excessive wear to an AMR in areas such as wheels and motor bearings etc.

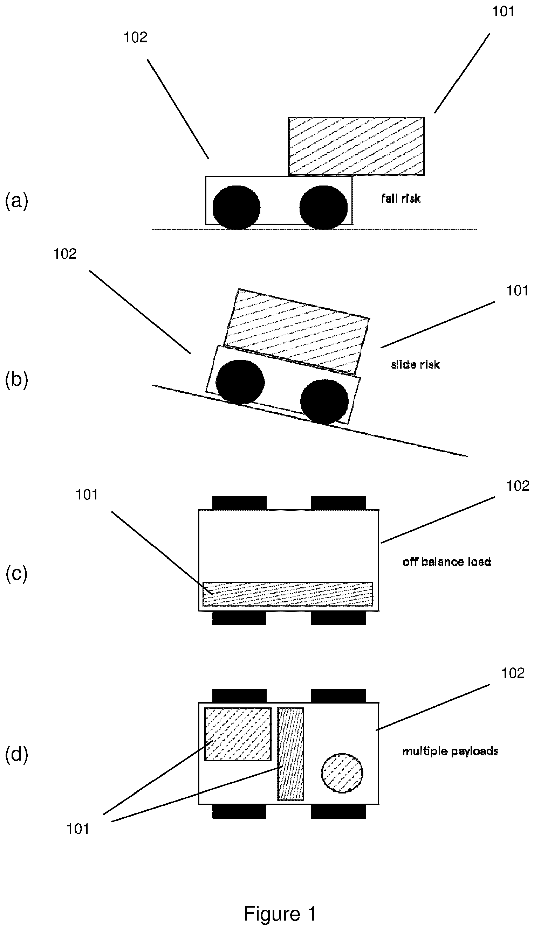

Figure 1 provides some examples of payload position importance. In figure 1(a) the payload 101 is at risk of falling off due to incorrect replacement on the AMR 102. In figure 1(b), the payload is a slide risk due to the sloped ground on which the robot is travelling. In figure 1(c), the payload is off centre and can throw the AMR off balance. In figure 1(d), multiple payloads are carried on the AMR altering the centre of gravity and possibly making the AMR 102 unstable.

There have been a number of attempts to address the issue of payload tracking. For example, JPH09124298A discloses an automatic guided vehicle having a body and a fork part performing carrying operations under control of a controller. A strain gauge detecting the distortion of forks is mounted on the forks of the fork part. The weight of cargo loaded can be detected based on the quantity of distortion detected by the strain gauge, and the controller can thus be notified based on the weight of cargo that some abnormality has happened with respect to the cargo.

WO2009156266A1 discloses a sensor-based control system allows an autonomous transport vehicle to have intelligent driving behaviour that takes into account individual characteristics of the freight to be transported. For example, the acceleration and braking behaviour of the autonomous transport vehicle can be selected depending on the stability of the cargo. With the aid of sensor readings of a sensor network, a track or parking space can be planned on which special environmental conditions (such as temperature or luminous humidity) are given. The higher intelligence of the autonomous mining vehicle optimizes the handling of the cargo and eliminates the need for camera-based monitoring. For example, the loss of the cargo from the truck bed can be sensed and signalled automatically.

WO2018116718A1 discloses a cargo transport system, comprising a management device and a plurality of automated guided vehicles. Each of the automated guided vehicles comprises a movement instruction receiving unit which receives from the management device a movement instruction to move to at least one loading work site, at which work of loading cargo for transport onto the automated guided vehicle is to be carried out, or a designated location in the vicinity of said work site; an information transmission unit which transmits loading information to the management device, said loading information relating to a loading state of the cargo which has been loaded onto the automated guided vehicle; and a travel unit which travels in an automated manner according to the received movement instruction. The management device comprises: a movement instruction management unit which transmits the movement instructions to each of the automated guided vehicles; a loading information receiving unit which receives the loading information from each of the automated guided vehicles; and a load management unit which manages the loads of each of the automated guided vehicles on the basis of the loading information. If the load upon a first automated guided vehicle has exceeded a predetermined reference during the loading work of the first automated guided vehicle at the loading work site, the movement instruction management unit transmits a movement instruction to a second automated guided vehicle, which is different from the first automated guided vehicle, to move to the loading work site or to the designated position in the vicinity thereof.

However, the above outlined systems and methods suffer from drawbacks. Accordingly it is a desire of the present disclosure to provide a system and method for operating an autonomous mobile robot AMR based on a payload sensing.

US 2017/291315 A1 describes, according to its abstract, a system for determining and promoting safety of a robotic payload, including: a controller; and a robot controllable by the controller, the robot comprising: at least one payload region configured to carry a payload; a sensor configured to detect at least one of a payload mass and a payload distribution, the sensor further configured to alert the controller regarding the one or more of a payload mass and a payload distribution, the controller further configured to perform, in response to the alert, one or more of determining safety of the payload and promoting the safety of the payload.

JP 2011 175369 A describes, according to a machine translation of its abstract, an unmanned conveying vehicle, wherein limiting of vehicle speed is performed by determination condition of deviation of gravity centre position of the load and a turning direction. Namely, limiting of the vehicle speed is performed in the event of right deviation and left turning, and in the event of left deviation and right turning, and limiting of the vehicle speed is not performed when the gravity position of the load is not deviated or when turning in the travelable direction in a stable state, even if deviated. Thus, the efficiency of the conveying vehicle is raised, while the vehicle speed limiting according to the state of the load is achieved. KR 2018 0042975 A describes, according to a machine translation of its abstract, an efficient method for easily determining an acceleration range in which a loaded article is not turned over by measuring a position of the centre of gravity of the loaded article in accordance with characteristics of each of the loaded articles when a moving unit such as a logistics robot carries various loaded articles which may include arbitrary objects and have a predetermined height. According to one aspect of the disclosure, a moving unit for moving a loaded article to a predetermined position comprises: a support unit for loading a loaded article of a predetermined height including one or more loaded objects; a driving unit coupled to the support unit to accelerate and move the moving unit to move the loaded article to a predetermined position; and a gravity centre sensing unit for sensing a position of the centre of gravity of the loaded article. The acceleration may be controlled by the driving unit to prevent the loaded articles from being turned over on the basis of the position of the centre of gravity.

### Summary of the Disclosure

It has been found that determining the position of the centre of gravity, CoG, on the AMR helps avoid the scenarios outlined with respect to figure 1. The position of a payload CoG on top of an AMR can be calculated using load sensing. Load sensing allows for an active (real time) calculation to be made, which can be used to define a drive manoeuvre control for a given payload value and its CoG position. For example, a. 1000kg payload, off balance +500mm in X, -100mm in Y = max cornering speed left and or right can be reduced or increased accordingly.

Active tracking of the payload CoG position can:
(i) provide feedback to a motor controller(s) of the AMR which in turns provides suitable manoeuvre control and path planning, for example a 100kg payload can be manoeuvred faster than a 1000kg payload,
(i) adjust manoeuvre control and path planning accordingly if a payload CoG changes position during manoeuvre (if remaining within allowable limit),
(iii) automatically stop manoeuvre if payload CoG position is sensed out of limit and alter a payload CoG position by changing angle to a preferred position (if a tilt lift mechanism is installed). Figure 1 shows the use of tilt lift mechanism (201) on an AMR (102). Using the mechanism, the payload (101) can be repositioned and thus the CoG can be corrected on the AMR.

The present disclosure provides a method for operating an autonomous mobile robot AMR based on a payload sensing comprising determining the centre of gravity of the payload on a platform of the AMR, determining which area of a plurality of predefined areas of the platform the payload CoG is positioned in, and determining one or more drive parameters for the AMR based on the determined area of the platform on which the payload CoG is positioned, the one or more drive parameters limiting the transport speed of the AMR while the payload is being carried thereon.

The method may further comprise determining the mass of the payload and using the determined mass as an input when determining the drive parameters.

The method may further comprise determining that the mass of the payload is above a predetermined threshold and setting the one or more drive parameters to prevent movement of the AMR.

The method may further comprise determining that the area of the platform on which the payload CoG is positioned is a predetermined unacceptable area of the platform and setting the one ore more drive parameters to prevent movement of the AMR.

Optionally, when it is determined that the one or more drive parameters should prevent movement of the AMR, the method may comprise waiting for a change in the mass of the payload and determining if the changed mass is below the predetermined threshold.

Optionally, when it is determined that the one or more drive parameters should prevent movement of the AMR, the method may comprise waiting for a change in the position of the payload CoG and determining if the changed position is within the predetermined acceptable area.

The method may further comprise constantly or periodically determining the CoG of the payload and in which area the payload CoG is positioned, wherein if it is determined that the payload CoG has moved to a different area of the plurality of predetermined areas, determining different one or more drive parameters for the AMR based on the determined different area of the platform.

The method may further comprise constantly or periodically determining the CoG of the payload and in which area the payload CoG is positioned, wherein if it is determined that the payload CoG has moved to a predetermined unacceptable area of the plurality of predetermined areas, determining that the one or more drive parameters should be set to stop movement of the AMR.

The method may further comprise constantly or periodically determining the mass of the payload, wherein if it is determined that the mass of the payload has changed, determining different one or more drive parameters for the AMR based on the determined different mass.

The method may further comprise constantly or periodically determining the mass of the payload, wherein if it is determined that the mass of the payload has changed to exceed a predetermined threshold, determining that the one or more drive parameter should be set to stop movement of the AMR.

The method may further comprise receiving a payload profile including one or more drive parameters for the payload CoG on the platform and if the determined area of the platform on which the payload CoG is positioned is not a predetermined unacceptable area, using the one or more drive parameters of the received payload profile.

The method may further comprise receiving a payload profile including sets of one or more drive parameters for the payload CoG on the platform, each set of one or more drive parameters corresponding to an area of the platform and using the set of one or more drive parameters corresponding to the determined area of the platform on which the payload CoG is positioned.

Optionally, a plurality of strain gauges on the platform are used to provide measurements for use in the determination of the CoG of the payload. Four strain gauges can be provided on the platform.

Optionally, determining the centre of gravity of the payload on a platform comprises determining a two dimension 2D position of the centre of gravity.

Optionally, wherein determining the centre of gravity of the payload on a platform comprises determining a three dimension 3D position of the centre of gravity.

The present teachings also provide an autonomous mobile robot AMR system using a payload sensing, the system comprising means for determining the centre of gravity of the payload on a platform of the AMR, determining which area of a plurality of predefined areas of the platform the payload CoG is positioned in, and determining one or more drive parameters for the AMR based on the determined area of the platform on which the payload CoG is positioned, the drive parameters limiting the transport speed of the AMR while the payload is being carried thereon.

Also provided is an autonomous mobile robot AMR comprising:
a platform for carrying a payload;
one or more load sensors; and
a processor configured to:
   receive data from the one or more sensors;
   determine the centre of gravity of a payload on the platform based on the received data;
   determine an area of a plurality of predefined areas on the platform in which the centre of gravity COG of the payload is located; and
   determine one or more drive parameters for the AMR based on the determined area, wherein the one or more drive parameters limit the speed of the AMR while the payload is being carried on the AMR.

The sensors may comprise strain gauges mounted in respective load paths from the platform to respective wheels of the AMR at a location where a deformation of the load path can be detected in response to the weight of a payload placed on the AMR.

The system and the processor may each or either be configured to implement a method as described above.

Yet further provided is an autonomous mobile robot AMR for carrying a payload, the AMR comprising:
a plurality of wheels; and
one or more strain gauges mounted in respective load paths from the platform to respective wheels of the AMR at a location where a deformation of the respective load path can be detected in response to the weight of a payload carried by the AMR.

### Brief Description of the drawings

The disclosure will now be described by way of example with reference to the accompanying drawings in which:
Figure 1 illustrates a number of views of an AMR having a payload thereon;

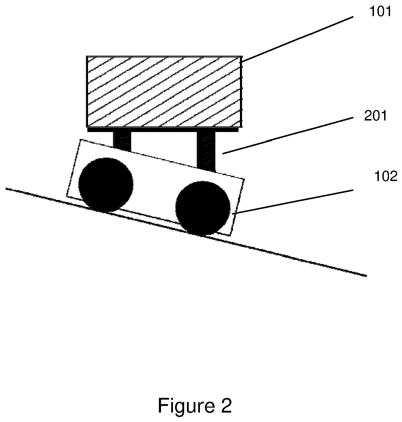

Figure 2 illustrates a view of an AMR having a tilt lift mechanism;
Figure 3 illustrates a number of views of an AMR having a plurality of strain gauges in accordance with the present teachings;
Figure 4 illustrated an overhead view of a platform of an AMR having a plurality of strain gauges in accordance with the present teachings;
Figure 5 illustrates an example of an AMR operating with payload 2D CoG position slip detection and feedback control in accordance with the present teachings;
Figure 6 illustrates an overhead view of a platform of an AMR showing predefined zones; and
Figure 7 illustrates a flow diagram illustrating the decision making process of the load sensing system of the AMR in accordance with the present teachings.

### Detailed Description

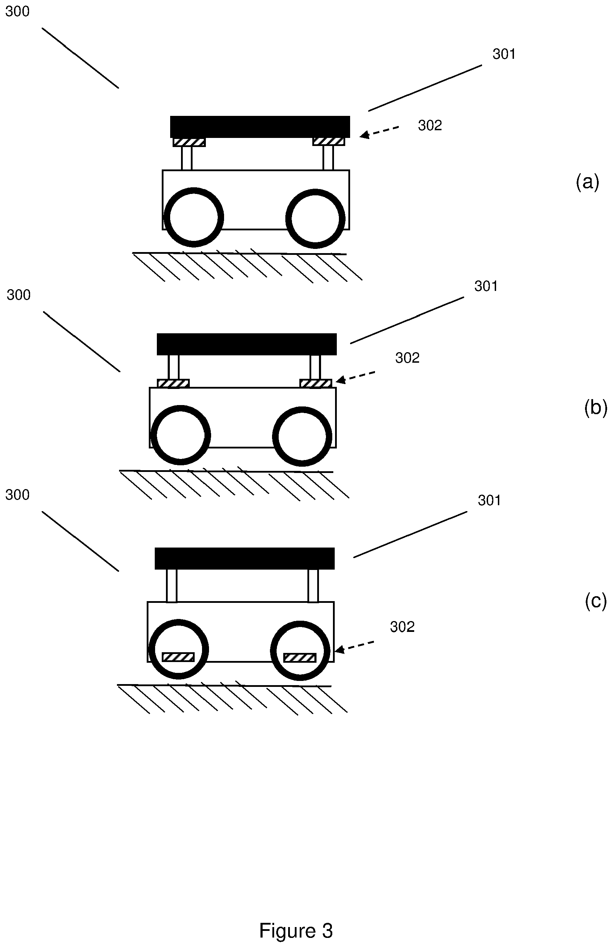

Referring now to the drawings, in particular Figure 3, there is shown generally indicated by the reference numeral 300 an AMR. The AMR 300 includes a platform 301 onto which a payload can be placed.

A plurality of strain gauges 302 are provided on the AMR 300. In figure 3(a), the strain gauges 302 are provided directly beneath the platform 301. In figure 3(b) the strain gauges 302 are provided beneath legs 303 of the platform. In figure 3(c) the strain gauges 302 are provided on the axles of the AMR 300.

The AMR 300 incudes an embedded load sensing system which includes a controller. The system relies on reading the strain gauges 302 installed in strategic positions. The exact locations of the strain gauges can be chosen as appropriate by the person skilled in the art as long as sufficient readings are provided to the load sensing system. The present disclosure uses one strain gauge at each wheel/motor mount on the chassis. The load sensing system of the AMR 300 is replicating the function of a load cell, a typical device used for weighing applications.

In accordance with the present disclosure, by directly installing an appropriate strain gauge 303 into a load bearing chassis area an integrated load cell can be created. The design of a load bearing chassis area can be so that a load path is identified and an appropriate weakened profile made, somewhere along the load path. This weakened profile is where a strain gauge is installed - it is an area designed to deform very slightly under load. As is known to those skilled in the art, the load path, design of the weakened area and deformation amount due to a range of loads can be optimized with finite element analysis.

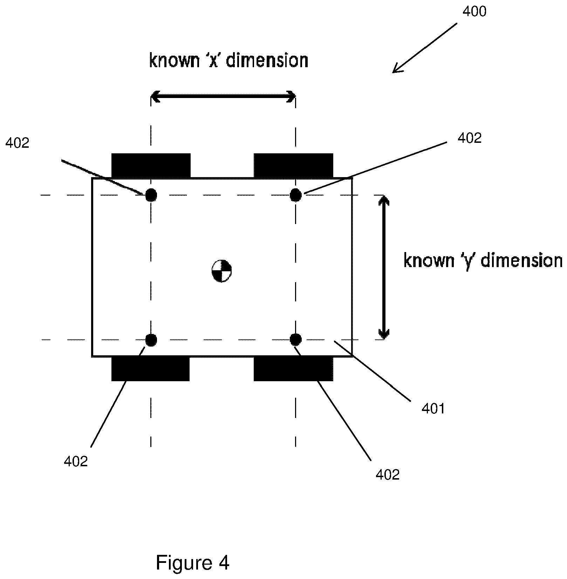

Referring now to Figure 4 an AMR 400 is shown. A plurality of strain gauges 402 are provided beneath the platform 401. The strain gauges may be positioned on the chassis as outlined above. The positon of the strain gauges and also the distance between them (X and Y dimensions in figure 4) are known to the embedded load sensing system of the robot 400. In the present embodiment the strain gauges 402 are provided at roughly the corners of the platform 401. Using measurements from the strain gauges the two dimensional 2D CoG positon of a payload on the robot 300 can be calculated. The reported mass measurements provided to the load sending system in this example are M1, M2, M3 and M4, respectfully.

The 2D CoG is calculated using a method known as corner weighting'. The general method is typically used in the automotive industry. Corner weighting, sometimes referred to as "corner balancing," "weight jacking," or "scaling," involves adjusting the spring perches of a car to get a balanced diagonal weight on the tires. Ideally the car should have 50% of its weight on the Left Front and Right Rear tires, and 50% on the Right Front and Left Rear.

While this technique is used predominantly in the automotive industry, this technique is useful for an AMR that automatically collects or carries a range of payloads in accordance with the present disclosure because it is possible to calculate the 2D CoG of the payload (2D 'x & y' calculation) . The specific technique used to calculate the static 2D CoG position of the payload on the AMR will not be explained in detail herein but can be chosen as appropriate by the person skilled in the art.

The CoG can be two dimensional 2D as already outlined e.g., x-y plane or three dimensional 3D x-y-z plane. In order to determine the 3D centre of gravity, a tilt lift system could be provided on the AMR. It is possible to calculate the third dimension (z) if a tilt lift system is used to physically lift and tilt the payload a known amount and observing changes in the weight measurements, as is well known.

The calculated 2D CoG position can in turn be used to determine certain drive motion parameters for the AMR. For example, a 1000kg payload (measured with the integrated load cells) and a calculated off-centre, 2D CoG (again measured with the integrated load cells) may have certain manoeuvre / speed restrictions. Dynamic object sliding could be detected if the reading of load cell data (2D CoG calculation) changes during manoeuvring. While the specific description makes reference to drive parameters, it will be understood that a single drive parameter may be determined and used, instead. Examples of a single drive parameter include speed, a speed limit, acceleration or an acceleration limit. Examples multiple drive parameters include sets of one or more of: speed and direction, motor torques or currents, acceleration limits, speed, speed limits or the like.

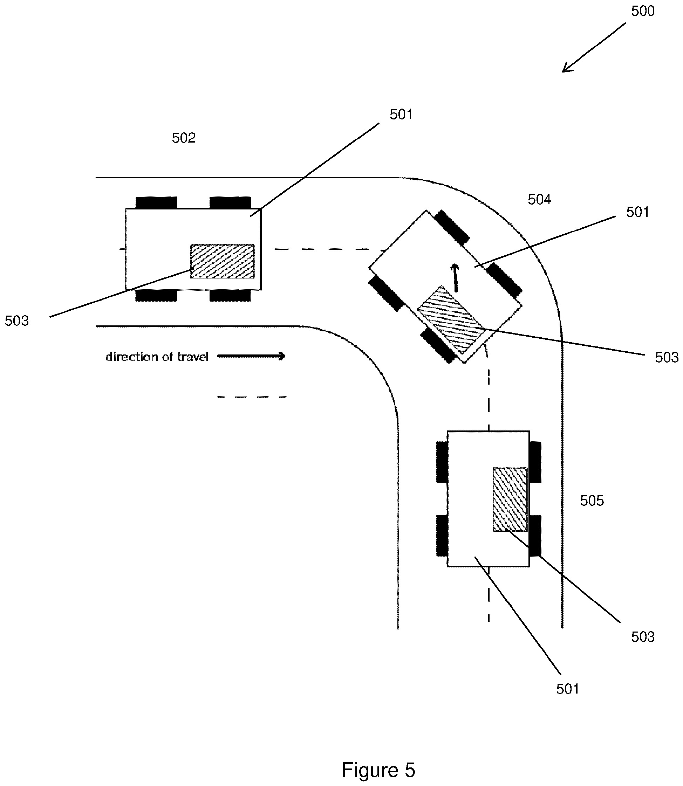

Referring now to Figure 5 there is an example 500 of payload position slip detection and feedback control. While an unloaded AMR could be allowed to travel with a reasonable predetermined speed (not to damage the environment), the loaded AMR 501 should behave according to trajectory curves consistent with the load it carries. That is, it must slow down while cornering. In most cases Vcurve (cornering velocity) is less than Vstraight (straight line velocity). Depending on the payload 2D CoG sensed and the weight of the payload sensed, it is possible for notification of a sliding effect to be provided to the controller of the load sensing system. The controller then changes the speed and possibly the curve of the trajectory to prevent the load slipping or falling off the platform. In a critical case, when object is detected to slip, the AMR will minimize its speed to accurately pass the dangerous part of the route.

In figure 5, the AMR 501 is in a first position or start position 502, with the payload 503 position considered acceptable and drive parameters for the AMR 501 are selected by the controller. The AMR then moves off towards its destination using the drive parameters.

It can be seen that the AMR has proceeded to a second position 504 where the AMR 501 is cornering (moving around a corner). Furthermore, the payload 503 begins to slip backwards on the platform due to the dynamic reaction forces arising during the cornering manoeuvre.

At position 505, the system detects or determines that the payload 2D CoG has moved/slipped to a new position on the platform using feedback from the strain gauges. Based on the received data, the system determines that it is safe to continue. Furthermore the drive parameters for the new position of the payload 2D CoG and the platform are updated. The AMR 501 proceeds with the updated drive parameters.

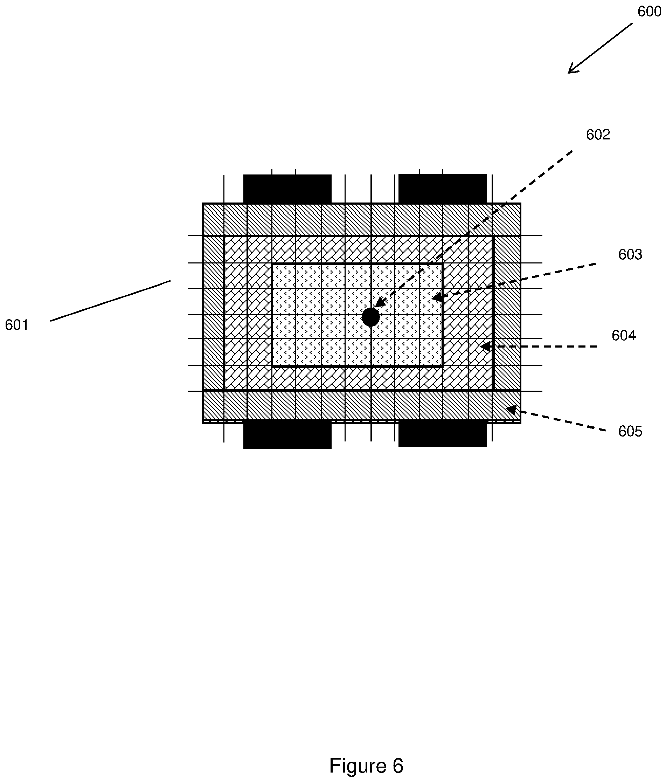

Referring now to figure 6 there is shown a diagram 600illustrating two dimensional (2D) coordinate zones for 2D CoG feedback. The strain gauge readings are used to calculate an X and Y coordinate on the platform of the AMR for the 2D CoG (that is the projection of the CoG onto the platform). This position can in turn be mapped to different manoeuvre control functions. For example, a 2D CoG calculation that determines a payload on the centre 602 of the platform 601 means the AMR is able to be manoeuvred faster around a right hand corner than a 2D CoG calculation that falls somewhere along the left hand edge of the top surface.

Accordingly, central position 602 is considered to be the preferred position for payload 2D CoG placement. An area 603 around centre position 601 is considered to be a normal speed area. That is, when a payload 2D CoG is in the centre area 603, the AMR 600 can operate at normal or pre-set standard speeds.

If a 2D CoG position calculation that started off with a payload being in the centre 602 (or centre area 606) but was found to have moved during manoeuvre, for example to somewhere along the right hand edge or slow speed area 604, the controller can change the manoeuvre parameters so the payload does not fall off the top surface of the platform 601. That is, the AMR must now operate at reduced speeds to ensure no further slippage occurs.

If the 2D CoG calculation finds that it has moved to an out of limit area or danger area 605, the AMR can stop operation so it does not cause damage. If possible, a recovery function could be initiated at this point.

As previously mentioned with reference to figure 4, each strain gauge gives an individual mass measurement - for example the mass reading reported by each strain gauge could be M1, M2, M3 and M4, respectfully. By the measurement of M1 to M4, the coordinates of the payload's 2D CoG on the platform 601 can be determined. The grid, shown on the figure 6 allows a designation of 2D coordinates of the object on the platform.

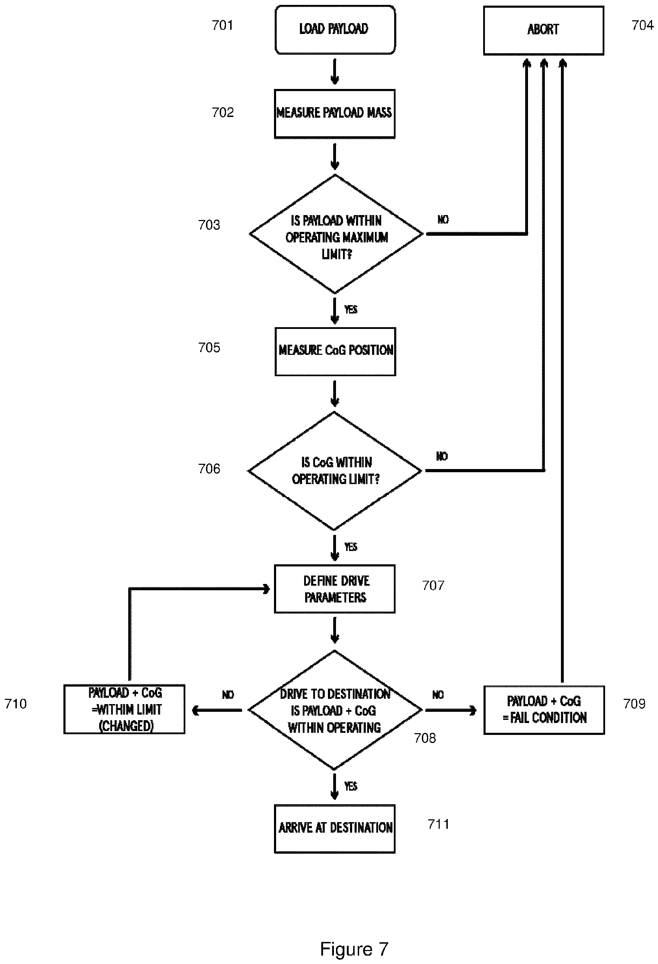

Referring now to figure 7 a flow diagram 700 illustrating a decision making process of the controller of AMR is shown.

At step 701 a payload is loaded onto the platform of the AMR.

At step 702 individual mass measurements are received by the controller from each of the strain gauges. Using these individual measurements the controller is able to determine the mass of the payload.

At step 703 the controller determines if the mass of the loaded payload is within the operating limits of the AMR. If the mass exceeds the operating limits the controller aborts to step 704. If the mass does not exceed the operating limits the procedure continues to step 705.

At step 705 the 2D CoG positon of the payload is measured or determined as previously described. It will be appreciated by the person skilled in the art that any method of determining the centre of gravity position can be used as appropriate.

At step 706 the controller determines if the aforementioned 2D CoG position is within the operating limits set by the controller. For example, the controller determines if the payload 2D CoG is in a central area (normal speed area), a reduced speed area or danger area of the platform. If the controller determines that the payload 2D CoG is in a position outside the set operating limits the controller aborts to step 704. However, if it is determined that the 2D CoG position is within the present operating limits the procedure continues to step 707.

At step 707 drive parameters are defined by the controller in accordance with the determined 2D CoG position. With the drive parameters determined the AMR can now begin moving towards its destination with the payload.

The controller takes constant or periodic measurements from the strain gauges under the platform as the AMR is driving and moving towards its destination. Using these measurements, the controller is able to determine if the payload mass and/or 2D CoG thereof remains within operating parameters - step 708. If there are no issues with any change of payload mass and/or 2D CoG during transportation of the payload the AMR can arrive at its destination - 711. That is, if the payload 2D CoG remains within the same area during movement of the AMR to the destination, no action needs to be taken.

If the control determines that the payload mass and/or 2D CoG have changed such that one of these is now outside the pre-set operating parameters the procedure moves to a fail position at step 709. That is the AMR is brought to a halt and declares a fail condition as a result.

If the control determines that the payload mass and/or 2D CoG position have changed but are still within the pre-set operating parameters of the AMR, the controller can redefine the drive parameters in view of the changed payload mass and/or 2D CoG position. This is shown in step 710 wherein in view of the change in payload mass and/or 2D CoG position, the procedure returns to step 707.

With redefined drive parameters the AMR can continue on its route and arrive at destination - step 711.

The present disclosure offers a number of advantages over the prior art. These include:
Ability to measure payload 2D CoG position;
Ability to measure payload mass;
Ability to apply suitable manoeuvre control according to payload mass;
Ability to apply suitable manoeuvre control according to payload 2D CoG position
Ability to apply suitable manoeuvre control according to payload 3D CoG (if applicable); and
Ability to stop operating (come to a halt) in event of 'fail' load condition as outlined above.

The disclosure provides a novel method for operating an AMR based on some payload mass measurement inputs and enables better control of AMR operation, logistics processes and overall manufacturing processes.

The present disclosure enables improved safety within the workshop during the AMR operation.

The present disclosure extends to the creation of carried objects profiles for better operations. Profiles may be used with new objects and recently carried objects, in which case the profile may be based on previous operation.

It will be understood that while exemplary features of the method and system for operating an AMR based on a payload 2D CoG position have been described, that such an arrangement is not to be construed as limiting the disclosure. For example, weight sensors other than the described strain gauges may be used and are known in the art, for example load cells mounted in relation to the AMR's suspension or between the platform and the remainder of the AMR, as well as The method for operating an AMR based on a payload 2D CoG position may be implemented in software, firmware, hardware, or a combination thereof.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or sub-combinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

## Claims

1. A method for operating an autonomous mobile robot AMR based on a payload sensing comprising:
determining the centre of gravity "CoG" of the payload (101, 503) on a platform (301, 401, 601) of the AMR (102, 300, 400, 501, 600);
determining which area of a plurality of predefined areas of the platform, comprising a centre area (603) around a centre (602) of a top surface of the platform (601), a slow speed area (604) around the centre area, and an unacceptable area (605) around the slow speed area, the payload CoG is positioned in;
determining one or more drive parameters for the AMR based on the determined area of the platform on which the payload CoG is positioned, the one or more drive parameters limiting a transport speed of the AMR while the payload is being carried thereon and preventing movement of the AMR if it is determined that the area of the platform on which the payload CoG is positioned is the unacceptable area,
constantly or periodically determining the CoG of the payload and in which area the payload CoG is positioned, and
if it is determined that the payload CoG has moved to a different area of the plurality of predetermined areas, determining different one or more drive parameters for the AMR based on the determined different area of the platform.

2. The method of claim 1, further comprising determining the mass of the payload and using the determined mass as an input when determining the one or more drive parameters.

3. The method of claim 2, further comprising determining that the mass of the payload is above a predetermined threshold and setting the one or more drive parameters to prevent movement of the AMR.

4. The method of any of claim 3, further comprising, when it is determined that one or more drive parameters should prevent movement of the AMR, waiting for a change in the mass of the payload and determining if the changed mass is below the predetermined threshold.

5. The method of claim 1, further comprising, when it is determined that one or more drive parameters should prevent movement of the AMR, waiting for a change in the position of the payload CoG and determining if the changed position is within a predetermined acceptable area.

6. The method of any one of claims 1 to 5, further comprising receiving a payload profile including sets of one or more drive parameters for the payload CoG on the platform, each set of one or more drive parameters corresponding to an area of the platform and using the set of one or more drive parameters corresponding to the determined area of the platform on which the payload CoG is positioned.

7. The method any one of claims 1 to 6, wherein a plurality of strain gauges on the platform are used to provide measurements for use in the determination of the CoG of the payload.

8. The method of claim 7 wherein four strain gauges are provided on the platform.

9. The method of any one of claim 1 to 8 wherein determining the centre of gravity of the payload on the platform comprises determining a two dimension 2D position of the centre of gravity.

10. The method of any one of claim 1 to 8 wherein determining the centre of gravity of the payload on the platform comprises determining a three dimension 3D position of the centre of gravity.

11. An autonomous mobile robot AMR (102, 300, 400, 501, 600) comprising:
a platform (301, 401, 601) for carrying a payload (101, 503);
one or more load sensors; and
a processor configured to:
receive data from the one or more sensors;
determine the centre of gravity of the payload on the platform based on the received data;
determine an area of a plurality of predefined areas on the platform, comprising a centre area (603) around a centre (602) of a top surface of the platform (601), a slow speed area (604) around the centre area, and an unacceptable area (605) around the slow speed area, in which the centre of gravity COG of the payload is located;
determine one or more drive parameters for the AMR based on the determined area, wherein the one or more drive parameters limit a speed of the AMR while the payload is being carried on the AMR and prevent movement of the AMR if it is determined that the area of the platform on which the payload CoG is positioned is the unacceptable area,
constantly or periodically determine the CoG of the payload and in which area the payload CoG is positioned, and
if it is determined that the payload CoG has moved to a different area of the plurality of predetermined areas, determine different one or more drive parameters for the AMR based on the determined different area of the platform.

12. The AMR of claim 11, wherein the load sensors comprise strain gauges (302, 402) mounted each at a location where a deformation of a load path from the platform to wheels of the AMR can be detected in response to a weight of the payload placed on the AMR.

13. The AMR of claim 11, wherein the processor is configured to implement the method of any one of claims 2 to 10.

## Patentansprüche

1. Verfahren zum Betreiben eines autonomen mobilen Roboters AMR basierend auf einer Nutzlasterfassung, umfassend:
Bestimmen des Schwerpunkts "CoG - Center of Gravity" der Nutzlast (101, 503) auf einer Plattform (301, 401, 601) des AMR (102, 300, 400, 501, 600);
Bestimmen, in welchem Bereich von mehreren vordefinierten Bereichen auf der Plattform, umfassend einen mittleren Bereich (603) um einen Mittelpunkt (602) einer Oberfläche der Plattform (601), einen Niedriggeschwindigkeitsbereich (604) um den mittleren Bereich und einen nichtakzeptablen Bereich (605) um den Niedriggeschwindigkeitsbereich, der Nutzlast-CoG positioniert ist;
Bestimmen eines oder mehrerer Fahrparameter für den AMR basierend auf dem bestimmten Bereich der Plattform, auf dem der Nutzlast-CoG positioniert ist, wobei der eine oder die mehreren Fahrparameter eine Transportgeschwindigkeit des AMR begrenzen, während die Nutzlast darauf getragen wird, und eine Bewegung des AMR verhindern, wenn bestimmt wird, dass der Bereich der Plattform, auf dem der Nutzlast-CoG positioniert ist, der nichtakzeptable Bereich ist,
konstantes oder periodisches Bestimmen des CoG der Nutzlast und in welchem Bereich der Nutzlast-CoG positioniert ist und
wenn bestimmt wird, dass sich der Nutzlast-CoG zu einem anderen Bereich der mehreren vorbestimmten Bereiche verlagert hat, Bestimmen eines oder mehrerer anderer Fahrparameter für den AMR basierend auf dem bestimmten anderen Bereich der Plattform.

2. Verfahren nach Anspruch 1, ferner umfassend Bestimmen der Masse der Nutzlast und Verwenden der bestimmten Masse als Eingabe beim Bestimmen des einen oder der mehreren Fahrparameter.

3. Verfahren nach Anspruch 2, ferner umfassend Bestimmen, dass die Masse der Nutzlast über einer vorbestimmten Schwelle liegt und dahingehendes Einstellen des einen oder der mehreren Fahrparameter, eine Bewegung des AMR zu verhindern.

4. Verfahren nach Anspruch 3, ferner umfassend, wenn bestimmt wird, dass ein oder mehrere Fahrparameter eine Bewegung des AMR verhindern sollten, Warten auf eine Änderung der Masse der Nutzlast und Bestimmen, ob die geänderte Masse unter der vorbestimmten Schwelle liegt.

5. Verfahren nach Anspruch 1, ferner umfassend, wenn bestimmt wird, dass ein oder mehrere Parameter eine Bewegung des AMR verhindern sollten, Warten auf eine Änderung der Position des Nutzlast-CoG und Bestimmen, ob die geänderte Position innerhalb eines vorbestimmten akzeptablen Bereichs liegt.

6. Verfahren nach einem der Ansprüche 1 bis 5, ferner umfassend Empfangen eines Nutzlastprofils einschließlich Sätzen von einem oder mehreren Fahrparametern für den Nutzlast-CoG auf der Plattform, wobei jeder Satz von einem oder mehreren Fahrparametern einem Bereich auf der Plattform entspricht, und Verwenden des Satzes von einem oder mehreren Fahrparametern, der dem bestimmten Bereich der Plattform, auf dem der Nutzlast-CoG positioniert ist, entspricht.

7. Verfahren nach einem der Ansprüche 1 bis 6, wobei mehrere Dehnungsmesser auf der Plattform dazu verwendet werden, Messungen zur Verwendung bei der Bestimmung des CoG der Nutzlast bereitzustellen.

8. Verfahren nach Anspruch 7, wobei vier Dehnungsmesser auf der Plattform bereitgestellt sind.

9. Verfahren nach einem der Ansprüche 1 bis 8, wobei das Bestimmen des Schwerpunkts der Nutzlast auf der Plattform Bestimmen einer zweidimensionalen 2D-Position des Schwerpunkts umfasst.

10. Verfahren nach einem der Ansprüche 1 bis 8, wobei das Bestimmen des Schwerpunkts der Nutzlast auf der Plattform Bestimmen einer dreidimensionalen 3D-Position des Schwerpunkts umfasst.

11. Autonomer mobiler Roboter AMR (102, 300, 400, 501, 600), umfassend:
eine Plattform (301, 401, 601) zum Tragen einer Nutzlast (101, 503):
einen oder mehrere Lastsensoren; und
einen Prozessor, der zu Folgendem ausgelegt ist:
Empfangen von Daten von dem einen oder den mehreren Sensoren;
Bestimmen des Schwerpunkts der Nutzlast auf der Plattform basierend auf den empfangenen Daten;
Bestimmen eines Bereichs von mehreren vordefinierten Bereichen auf der Plattform, umfassend einen mittleren Bereich (603) um einen Mittelpunkt (602) einer Oberfläche der Plattform (601), einem Niedriggeschwindigkeitsbereich (604) um den mittleren Bereich und einen nichtakzeptablen Bereich (605) um den Niedriggeschwindigkeitsbereich, in dem sich der Nutzlast-CoG befindet;
Bestimmen eines oder mehrerer Fahrparameter für den AMR basierend auf dem bestimmten Bereich, wobei der eine oder die mehreren Fahrparameter eine Geschwindigkeit des AMR begrenzen, während die Nutzlast auf dem AMR getragen wird, und eine Bewegung des AMR verhindern,
wenn bestimmt wird, dass der Bereich der Plattform, auf dem der Nutzlast-CoG positioniert ist, der nichtakzeptable Bereich ist,
konstantes oder periodisches Bestimmen des CoG der Nutzlast und in welchem Bereich der Nutzlast-CoG positioniert ist und
wenn bestimmt wird, dass sich der Nutzlast-CoG zu einem anderen Bereich der mehreren vorbestimmten Bereiche verlagert hat, Bestimmen eines oder mehrerer anderer Fahrparameter für den AMR basierend auf dem bestimmten anderen Bereich der Plattform.

12. AMR nach Anspruch 11, wobei die Lastsensoren Dehnungsmesser (302, 402) umfassen, die jeweils an einem Ort montiert sind, an dem sich eine Deformation eines Lastpfads von der Plattform zu Rädern des AMR als Reaktion darauf, dass ein Gewicht der Nutzlast auf den AMR platziert wird, detektieren lässt.

13. AMR nach Anspruch 11, wobei der Prozessor zum Implementieren des Verfahrens nach einem der Ansprüche 2 bis 10 ausgelegt ist.

## Revendications

1. Procédé de fonctionnement d'un robot mobile autonome AMR en fonction d'une détection de charge utile comprenant :
la détermination du centre de gravité "CoG" de la charge utile (101, 503) sur une plate-forme (301, 401, 601) de l'ARM (102, 300, 400, 501, 600) ;
la détermination parmi une pluralité de zones prédéfinies de la plate-forme, comprenant une zone centrale (603) autour d'un centre (602) d'une surface supérieure de la plate-forme (601), une zone à vitesse lente (604) autour de la zone centrale et une zone inacceptable (605) autour de la zone à vitesse lente, de la zone dans laquelle est positionné le CoG de la charge utile ;
la détermination d'un ou plusieurs paramètres d'entraînement pour l'AMR en fonction de la zone déterminée de la plate-forme sur laquelle est positionné le COG de la charge utile, les un ou plusieurs paramètres d'entraînement limitant une vitesse de transport de l'AMR pendant que la charge utile est transportée sur celui-ci et empêchant un déplacement de l'AMR s'il est déterminé que la zone de la plate-forme sur laquelle le COG de la charge utile est positionné est la zone inacceptable,
la détermination constante ou périodique du COG de la charge utile et de la zone dans laquelle est positionné le COG de la charge utile, et
s'il est déterminé que le COG de la charge utile s'est déplacé vers une zone différente de la pluralité de zones prédéterminées, la détermination d'un ou plusieurs paramètres d'entraînement différents pour l'AMR en fonction de la zone différente déterminée de la plate-forme.

2. Procédé selon la revendication 1, comprenant en outre la détermination de la masse de la charge utile et l'utilisation de la masse déterminée comme entrée lors de la détermination des un ou plusieurs paramètres d'entraînement.

3. Procédé selon la revendication 2, comprenant en outre la détermination que la masse de la charge utile est supérieure à un seuil prédéterminé et le réglage des un ou plusieurs paramètres d'entraînement pour empêcher un déplacement de l'AMR.

4. Procédé selon l'une quelconque des revendications 3, comprenant en outre, lorsqu'il est déterminé qu'un ou plusieurs paramètres d'entraînement devraient empêcher un déplacement de l'AMR, l'attente d'un changement de la masse de la charge utile et la détermination que la masse modifiée est inférieure ou non au seuil prédéterminé.

5. Procédé selon la revendication 1, comprenant en outre, lorsqu'il est déterminé qu'un ou plusieurs paramètres d'entraînement devraient empêcher un déplacement de l'AMR, l'attente d'un changement de position du CoG de la charge utile et la détermination que la nouvelle position se trouve ou non dans une zone acceptable prédéterminée.

6. Procédé selon l'une quelconque des revendications 1 à 5, comprenant en outre la réception d'un profil de charge utile comprenant des ensembles d'un ou plusieurs paramètres d'entraînement du COG de la charge utile sur la plate-forme, chaque ensemble d'un ou plusieurs paramètres d'entraînement correspondant à une zone de la plate-forme et l'utilisation de l'ensemble d'un ou plusieurs paramètres d'entraînement correspondant à la zone déterminée de la plate-forme sur laquelle est positionné le COG de la charge utile.

7. Procédé selon l'une quelconque des revendications 1 à 6, dans lequel une pluralité de jauges de contrainte sur la plate-forme est utilisée pour fournir des mesures à utiliser dans la détermination du COG de la charge utile.

8. Procédé selon la revendication 7 dans lequel quatre jauges de contrainte sont fournies sur la plate-forme.

9. Procédé selon l'une quelconque des revendications 1 à 8 dans lequel la détermination du centre de gravité de la charge utile sur la plate-forme comprend la détermination d'une position bidimensionnelle 2D du centre de gravité.

10. Procédé selon l'une quelconque des revendications 1 à 8 dans lequel la détermination du centre de gravité de la charge utile sur la plate-forme comprend la détermination d'une position tridimensionnelle 3D du centre de gravité.

11. Robot mobile autonome AMR (102, 300, 400, 501, 600) comprenant :
une plate-forme (301, 401, 601) pour transporter une charge utile (101, 503) ;
un ou plusieurs capteurs de charge ; et
un processeur configuré pour :
recevoir des données à partir des un ou plusieurs capteurs ;
déterminer le centre de gravité de la charge utile sur la plate-forme en fonction des données reçues ;
déterminer parmi une pluralité de zones prédéfinies sur la plate-forme, comprenant une zone centrale (603) autour d'un centre (602) d'une surface supérieure de la plate-forme (601), une zone à vitesse lente (604) autour de la zone centrale et une zone inacceptable (605) autour de la zone à vitesse lente, la zone dans laquelle est situé le centre de gravité COG de la charge utile ;
déterminer un ou plusieurs paramètres d'entraînement pour l'AMR en fonction de la zone déterminée, les un ou plusieurs paramètres d'entraînement limitant une vitesse de l'AMR pendant que la charge utile est transportée sur l'AMR et empêchant un déplacement de l'AMR s'il est déterminé que la zone de la plate-forme sur laquelle le COG de la charge utile est positionné est la zone inacceptable,
déterminer constamment ou périodiquement le COG de la charge utile et la zone dans laquelle est positionné le COG de la charge utile, et
s'il est déterminé que le COG de la charge utile s'est déplacé vers une zone différente de la pluralité de zones prédéterminées, déterminer un ou plusieurs paramètres d'entraînement différents pour l'AMR en fonction de la zone différente déterminée de la plate-forme.

12. AMR selon la revendication 11, dans lequel les capteurs de charge comprennent des jauges de contrainte (302, 402) montées chacune à un endroit où une déformation d'un trajet de charge de la plate-forme par rapport à des roues de l'AMR peut être détectée en réponse à un poids de la charge utile placée sur l'AMR.

13. AMR selon la revendication 11, dans lequel le processeur est configuré pour mettre en œuvre le procédé selon l'une quelconque des revendications 2 à 10.
